# EUROPEAN PATENT SPECIFICATION

(11) **EP 0 967 407 B1**
(45) Date of publication and mention of the grant of the patent: **10.05.2006**
(21) Application number: 99105239.0
(22) Date of filing: 13.03.1999
(51) Int. Cl.: F16D 65/12

(54) **Brake disk for railway trains**
Bremsscheibe für Eisenbahnzüge
Disque de frein pour rames ferroviaires

(30) Priority: 26.06.1998 IT MI981468
(43) Date of publication of application: 29.12.1999
(73) Proprietor: Lucchini Sidermeccanica S.p.A., 25127 Brescia (IT)
(72) Inventor: Trombini, Ferruccio, 24065 Lovere (Bergamo) (IT)
(74) Representative: Lecce, Giovanni

(56) References cited:
- EP-A- 0 364 620
- FR-A- 2 648 527
- FR-A- 2 692 951
- GB-A- 655 920
- GB-A- 1 543 497

## Description

The present invention relates to a brake-disk for railway trains, such as known from GB 1 543 497 A, disclosing all features of the preamble of claim 1.

More particularly, the present invention relates to a brake-disk especially suitable for high speed trains intended for the transport of passengers.

As is known disk-based train braking is at present the usual system as concerns travellers' rolling material.

Both conventional speed trains and trains having a high speed of up to 300 km/h are equipped with this braking system; the related brake-disk is constituted by a crown obtained by melting, a hub from steel connected to the axle by forced keying, and a mechanical system of connecting gears between said hub and said crown. The latter is usually made from cast iron, sometimes from steel.

The disk-based braking systems for high speed, because of the higher stresses induced by speed rotations values higher than the traditional ones, work in conditions more severe than those that are characteristic of rolling material travelling at speeds lower than 200 km/h. From the thermal point of view, the maximum temperature reached on the surface of the disk is higher, as is-the heat to be dispersed during the braking; besides, phenomena of thermal fatigue or pyrocracking occur.

From the mechanical profile, drawbacks appear that are connected to a higher tension induced and a greater wear of the brake-disk. This involves the need of carrying out on the rolling material frequent maintenance operations and replacements of the brake-disk.

Object of the present invention is to obviate the above drawbacks.

More particularly, object of the present invention is to realise a brake-disk especially suitable for high speed applications, suitable to allow the optimum dissipation of heat that develops in the braking stage.

A further object of the invention is to realise a brake-disk suitable to minimise the tension state due to thermal gradients.

A further object of the invention is to realise a brake-disk such as to require limited maintenance operations and to allow to reduce running costs by planning a replacement simultaneous to that of the train wheels.

These and still other objects are achieved by the brake-disk for trains according to claim 1. The fact that the part of the connecting intermediate sector protruding from the crown progressively reduces in thickness, developing outsidewards in the direction of the front part of the hub, allows for an adequate ventilation and an optimum dissipation of heat.

The constructive and functional characteristics of the brake-disk for trains of the present invention may be better understood thanks to the following description, wherein reference is made to the attached drawing that represents a non limiting preferred embodiment, and wherein:

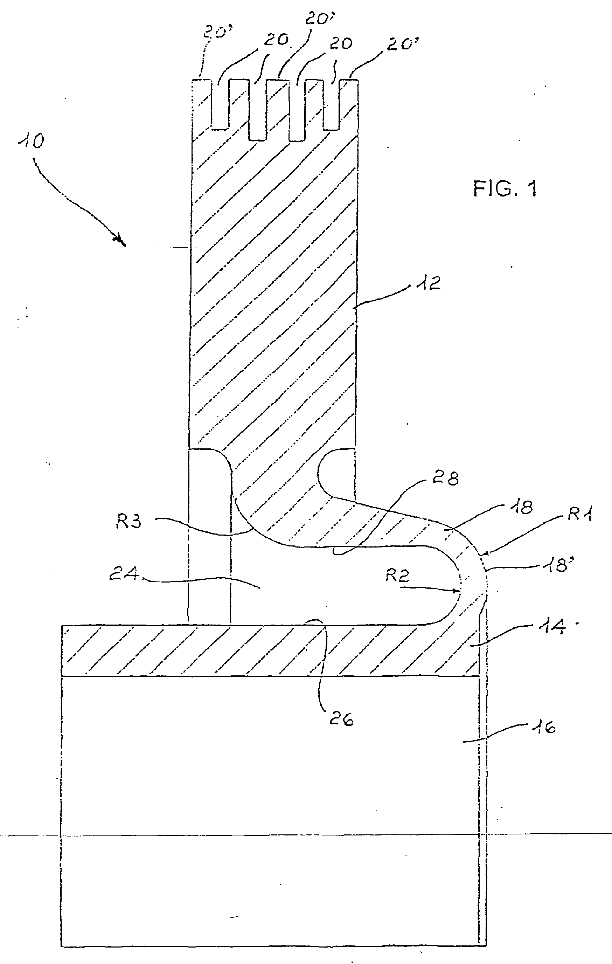

Figure 1 schematically shows a partial longitudinal section of the brake-disk for trains of the present invention.

With reference to said figure, the brake-disk of the present invention is indicated as a whole by 10 in Figure 1, which represents, by way of example, the upper half-part, the remaining lower half-part being specular to the same. Said disk is basically constituted by a crown 12, which defines its peripheral surface suitable to be matched by the braking gasket, and by a hub 12 provided with a transversally extended and centrally developed through-hole 16, said crown and said hub being connected to one another by an intermediate sector 18. Crown 12, hub 14 and the intermediate connecting sector 18 are advantageously constituted by a monoblock from steel obtained by hot-forming and subsequent roughing-out and finishing mechanical workings: The side surface or crown edge 12 is provided with a plurality of notches 20, developed in parallel with the longitudinal axis of disk 10; said notches, preferably equidistant from one another, alternate with sectors 20' integral with crown 12, forming a cooling finning along said edge.

The intermediate sector 18 that connects without solution of continuity crown 12 and hub 14, develops from the central part of said crown, in the part opposite to the edge provided with notches 20; said sector 18 defines as a whole a substantially S-shaped profile, whose part protruding from crown 12 progressively reduces, developing outsidewards in the direction of the front part of hub 14. The most projecting portion of sector 18, indicated by 18', defines an approximately half-circular profile which connects with said hub. According to a preferred embodiment, the external radius R1 of said portion 18' is comprised between 22 and 26 mm, preferably equal to 24 mm, while the internal radius R2 of the same portion 18' is comprised between 13 and 16 mm, preferably equal to 14,5 mm.

Sector 18, in the part protruding from crown 12, has the greatest thickness which progressively reduces nearing the projecting portion 18'. As a consequence, between crown 12 and hub 14 an annular chamber 24 forms, open on the front opposite to the most projecting portion 18' of the connecting sector 18. The configuration of said chamber is basically defined by a base constituted by a part of the external surface of hub 14, having a flat or a conic development, indicated by 26, which is opposed in the upper part by wall 28, formed by the internal front of sector 18. Said wall 28 develops in a linear manner, to connect in the front part with the arc formed by radius R2; on the back, said wall bends upwards, with a radius R3 preferably comprised between 20 and 30 mm, to form the connection curve with crown 12. The minimum height of said chamber 24, along the opposite portions defined by walls 26 and 28, is preferably comprised between 20 and 35 mm. Given the above described configuration, said chamber 24 forms along the brake-disk 10, close to hub 14, an annular cavity or chamber, open on the back-front, along which the continuous passage of an air flow during the rotation of said brake-disk is possible; such configuration allows to dissipate in the best way the heat which develops from the friction caused by the braking gaskets on crown 12 of the brake-disk 10, extending the thermal course and avoiding, consequently, the over-heating of hub 14, with possible ensuing skewing from the axle. At the same time, the intermediate sector 18 connecting crown 12 to hub 14 imparts elasticity to the brake-disk 10, forming between said hub and said crown a discontinuous connection along the vertical axis.

As can be understood from the above description, the advantages achieved by the invention are obvious.

The brake-disk of the present invention allows to reduce maintenance to a remarkable extent, as it is obtained integrally without connection gears between hub 14 and crown 12; the specific configuration of the intermediate sector 18, which unites and connects said hub and said crown, allows an adequate ventilation of the monoblock, preventing the over-heating of said hub and its ensuing possible skewing from the axle.

The presence of a finning along the periphery of crown 12 contribute to the dissipation of the heat generated by the friction caused by gaskets during the braking stage.

The invention, as described hereabove and claimed hereafter, has been proposed nevertheless only by way of non limiting example, being understood that the same is susceptible of many modifications and variants, all of which fall however within the scope of the appended claims.

For instance, the development and the configuration of the intermediate sector 18 connecting without solution-of continuity crown 12 and hub 14 may be different with respect to what has been described and illustrated by way of example, and the same intermediate sector may be oriented in the direction of the back front of the brake-disk 10.

In the same way, notches 20 forming the continuous finning along the edge of crown 12 may have any development and size whatever as concerns width and depth, and need not being equidistant from each other.

Lastly, possible structural inversions or alternative locations of the components or parts that form as a whole the brake-disk for railway trains of the present invention are also possible.

## Claims

1. A brake-disc for railway trains obtained from steel by hot-forming and subsequent roughing-out and finishing mechanical workings, said brake-disc comprising:
- a crown (12);
- a hub (14) having a front part and a transversally extended through hole (16);
- a connecting intermediate sector (18) defining as a whole a substantially S-shaped profile, having a part protruding from the crown (12) and which defines between said crown and said hub an annular chamber (24) open on one side; and
- said connecting intermediate sector (18) forming a most projecting portion (18') having an half-circular profile connected to said hub (14),
**characterised in that** the part of the connecting intermediate sector (18) protruding from the crown (12) progressively reduces in thickness, developing outsidewards in the direction of the front part of the hub (14).

2. The brake-disc according to claim 1, wherein the crown (12), the hub (14) and the intermediate connecting sector (18) are integrally formed.

3. The brake-disc according to claim 1 or 2, wherein the connecting intermediate sector (18) develops from the central part of the base of the crown (12).

4. The brake-disc according to anyone of the preceding claims, wherein the half-circular profile of the most projecting portion (18') has an external radius R1 comprised between 22 and 26 mm.

5. The brake-disc according to claim 4, wherein the external radius R1 is 24 mm.

6. The brake-disc according to anyone of the preceding claims, wherein the half-circular profile of the most projecting portion (18') has an internal radius R2 comprised between 13 and 16 mm.

7. The brake-disc according to claim 6, wherein the internal radius R2 is 14,5 mm.

8. The brake-disc according to anyone of the preceding claims, wherein the part of the connecting intermediate sector (18) protruding from the crown (12) has a greatest thickness which progressively reduces nearing the projecting portion (18').

9. The brake-disc according to anyone of the preceding claims, wherein the internal front of the intermediate sector (18) has a wall (28) bent upwards to connect with the half-circular profile of the most projecting portion (18') and on the back bent to connect with the crown (12) with a radius R3 comprised between 20 and 30 mm.

10. The brake-disc according to claim 9, wherein the wall (28) forms with the external surface (26) of the hub (14) a chamber (24) having along the opposite portions a minimum height comprised between 20 and 35mm.

11. The brake-disc according to anyone of the preceding claims, wherein the side surface or edge of the crown (12) has a plurality of notches (20), developed in parallel with the longitudinal axis of said disk.

## Patentansprüche

1. Scheibenbremse für Eisenbahnzüge, die aus Stahl durch Warmumformung und anschließende Grobbearbeitung und abschließende mechanische Bearbeitungen gefertigt wird, wobei die Scheibenbremse umfasst:
- eine Krone (12),
- eine Nabe (14) mit einem Vorderteil und einem sich transversal erstreckenden Durchgangsloch (16);
- einen Verbindungszwischensektor (18), der als ein Ganzes ein im Wesentlichen S-förmiges Profil begrenzt, einen von der Krone (12) herausragenden Teil aufweist, und welcher zwischen der Krone und der Nabe eine ringförmige Kammer (24) begrenzt, die auf einer Seite offen ist; und
- wobei der Verbindungszwischensektor (18) einen am meisten hervorragenden Abschnitt (18') mit einem halbkreisförmigen Profil bildet, welches mit der Nabe (14) verbunden ist;
**dadurch gekennzeichnet, dass** der Teil des Verbindungszwischensektors (18), der von der Krone (12) hervorsteht, sich fortschreitend,zur Außenseite hin in Richtung des Vorderteils der Nabe (14) entwickelnd, in seiner Dicke reduziert.

2. Scheibenbremse gemäß Anspruch 1, wobei die Krone (12), die Nabe (14) und der Zwischenverbindungssektor (18) einstückig ausgebildet sind.

3. Scheibenbremse gemäß Anspruch 1 oder 2, wobei der Verbindungszwischensektor (18) sich von dem mittleren Teil der Basis der Krone (12) entwickelt.

4. Scheibenbremse gemäß irgendeinem der vorhergehenden Ansprüche, wobei das halbkreisförmige Profil des am meisten herausragenden Abschnitts (18') einen Außenradius R1 aufweist, welcher zwischen 22 und 26 mm umfasst ist.

5. Scheibenbremse gemäß Anspruch 4, wobei der Außenradius R1 24 mm ist.

6. Scheibenbremse gemäß irgendeinem der vorhergehenden Ansprüche, wobei das halbkreisförmige Profil des am meisten hervorragenden Abschnitts (18') einen Innenradius R2 aufweist, welcher zwischen 13 und 16 mm umfasst ist.

7. Scheibenbremse gemäß Anspruch 6, wobei der Innenradius R2 14,5 mm ist.

8. Scheibenbremse gemäß irgendeinem der vorhergehenden Ansprüche, wobei der Teil des Verbindungszwischensektors (18), der aus der Krone (12) herausragt, eine größte Dicke aufweist, welche sich dem herausragenden Abschnitt (18') nähernd reduziert.

9. Scheibenbremse gemäß irgendeinem der vorhergehenden Ansprüche, wobei die innere Front des zwischenliegenden Sektors (18) eine Wand (28) aufweist, die nach oben gekrümmt ist, um sich mit dem halbkreisförmigen Profil des am meisten herausragenden Abschnitts (18') zu verbinden, und auf der Rückseite zur Verbindung mit der Krone (12) mit einem Radius R3 gekrümmt ist, der zwischen 20 und 30 mm umfasst ist.

10. Scheibenbremse gemäß Anspruch 9, wobei die Wand (28) mit der Außenoberfläche (26) der Nabe (14) eine Kammer (24) bildet, welche entlang den gegenüberliegenden Abschnitten eine Minimalhöhe aufweist, welche zwischen 20 und 35 mm umfasst ist.

11. Scheibenbremse gemäß irgendeinem der vorhergehenden Ansprüche, wobei die Seitenoberfläche oder-kante der Krone (12) eine Mehrzahl von Einkerbungen (20) aufweist, welche sich parallel zu der Längsachse der Scheibe entwikkeln.

## Revendications

1. Disque de frein pour trains de chemin de fer obtenu à partir d'acier par thermoformage et dégrossissage et travaux de finition mécaniques ultérieurs, ledit disque de frein comprenant :
- une couronne (12) ;
- un moyeu (14) comportant une partie avant et un orifice traversant s'étendant transversalement (16) ;
- un secteur intermédiaire de connexion (18) définissant dans son ensemble un profil sensiblement en forme de S, comportant une partie en saillie par rapport à la couronne (12) et définissant entre ladite couronne et ledit moyeu une chambre annulaire (24) ouverte sur un côté ;
- et ledit secteur intermédiaire de connexion (18) formant une partie la plus en saillie (18') à profil semi-circulaire reliée audit moyeu (14);
**caractérisé en ce que** la partie du secteur intermédiaire de connexion (18) en saillie par rapport à la couronne (12) diminue progressivement en épaisseur, en s'étendant vers l'extérieur dans la direction de la partie avant du moyeu (14).

2. Disque de frein selon la revendication 1 , dans lequel la couronne (12), le moyeu (14) et le secteur intermédiaire de connexion (18) sont formés en une seule pièce.

3. Disque de frein selon la revendication 1 ou 2, dans lequel le secteur intermédiaire de connexion (18) s'étend depuis la partie centrale de la base de la couronne (12).

4. Disque de frein selon l'une quelconque des revendications précédentes, dans lequel le profil semi-circulaire de la partie la plus en saillie (18') présente un rayon externe R1 compris entre 22 et 26 mm.

5. Disque de frein selon la revendication 4, dans lequel le rayon externe R1 est égal à 24 mm.

6. Disque de frein selon l'une quelconque des revendications précédentes, dans lequel le profil semi-circulaire de la partie la plus en saillie (18') présente un rayon interne R2 compris entre 13 et 16 mm.

7. Disque de frein selon la revendication 6, dans lequel le rayon interne R2 est égal à 14,5 mm.

8. Disque de frein selon l'une quelconque des revendications précédentes, dans lequel la partie du secteur intermédiaire de connexion (18) en saillie par rapport à la couronne (12) présente une épaisseur plus importante qui diminue progressivement en approchant de la partie en saillie (18').

9. Disque de frein selon l'une quelconque des revendications précédentes, dans lequel la partie avant interne du secteur intermédiaire (18) comporte une paroi (28) courbée vers le haut pour faire liaison avec le profil semi-circulaire de la partie la plus en saillie (18') et courbée à l'arrière pour faire liaison avec la couronne (12) avec un rayon R3 compris entre 20 et 30 mm.

10. Disque de frein selon la revendication 9, dans lequel la paroi (28) forme avec la surface externe (26) du moyeu (14) une chambre (24) comportant le long de parties opposées une hauteur minimale comprise entre 20 et 35 mm.

11. Disque de frein selon l'une quelconque des revendications précédentes, dans lequel la surface ou le bord latéral de la couronne (12) comporte une pluralité d'encoches (20), qui s'étendent parallèlement à l'axe longitudinal dudit disque.
